(19) Europäisches Patentamt
European Patent Office
Office européen des brevets

(11) Veröffentlichungsnummer: **0 125 438**
**B1**

(12) # EUROPÄISCHE PATENTSCHRIFT

(45) Veröffentlichungstag der Patentschrift: **07.01.87**

(21) Anmeldenummer: **84103143.8**

(22) Anmeldetag: **22.03.84**

(51) Int. Cl.⁴: **C 08 G 18/80**, C 08 G 18/67, C 25 D 13/06, C 08 G 18/64, C 09 D 3/72, C 09 D 3/49

(54) **Hitzehärtbare Überzugsmittel und deren Verwendung.**

(30) Priorität: **30.03.83 DE 3311516**

(43) Veröffentlichungstag der Anmeldung: **21.11.84 Patentblatt 84/47**

(45) Bekanntmachung des Hinweises auf die Patenterteilung: **07.01.87 Patentblatt 87/2**

(84) Benannte Vertragsstaaten: **AT BE CH DE FR GB IT LI NL SE**

(56) Entgegenhaltungen:
**EP - A - 0 027 641**
**EP - A - 0 096 210**
**DE - B - 1 195 943**
**FR - A - 2 268 051**
**FR - A - 2 426 718**
**GB - A - 1 261 313**

(73) Patentinhaber: **BASF Lacke + Farben Aktiengesellschaft, Max-Winkelmann-Strasse 80, D-4400 Münster (DE)**

(72) Erfinder: **Schupp, Eberhard, Dr., Tilsiter Weg 4, D-6830 Schwetzingen (DE)**
Erfinder: **Loch, Werner, Dr., In der Bleiche 2, D-6701 Erpolzheim (DE)**
Erfinder: **Osterloh, Rolf, Dr., Am Wehrhaus 16 a, D-6718 Gruenstadt (DE)**
Erfinder: **Ahlers, Klaas, Dr., Foehrenweg 21, D-4400 Muenster (DE)**

(74) Vertreter: **Welzel, Dr. Gunther et al, c/o BASF Aktiengesellschaft Carl-Bosch-Strasse 38, D-6700 Ludwigshafen (DE)**

EP 0 125 438 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine neue Art von hitzehärtbaren Überzugsmitteln, welche ohne Säurekatalyse aushärten. Die Erfindung bezieht sich dabei sowohl auf solche hitzehärtbaren Überzugsmittel, die konventionell oder mittels Pulverlackierung applizierbar sind als besonders auf solche, welche basische Gruppen enthalten, so dass sie nach Protonierung mit Säuren wasserdispergierbar werden und durch kathodische Elektrotauchlackierung aufgebracht werden können.

In der DE-AS 2 057 799 wird ein Verfahren zur kathodischen elektrophoretischen Abscheidung eines in Wasser dispergierten, ionischen, organischen Harzes, welches aus einem positiv geladenen, aminhaltigen Harz und einem blockierten, multifunktionellen Isocyanat besteht, beschrieben. Als Blockierungsmittel sind dabei 2 bis 8 Kohlenstoffatome enthaltende aliphatische oder cycloaliphatische Alkohole, Phenol, Caprolactam, ein $C_2$- bis $C_8$-aliphatisches Amin und aliphatische Amide genannt. In der DE-AS 2 057 799 findet sich jedoch kein Hinweis auf die Umsetzung eines Isocyanats mit einem sekundären aliphatischen Amin. Während in den Beispielen dieser Anmeldung Phenol und ein aliphatischer Alkohol als Blockierungsmittel eingesetzt werden, wird in handelsüblichen Produkten aus toxikologischen Gründen nur aliphatischer Alkohol verwendet. Dies hat jedoch zur Folge, dass als Vernetzungskatalysatoren Zinnsalze eingesetzt werden müssen und ausserdem Härtungstemperaturen oberhalb von 180°C erforderlich sind, was zu Vergilbungen führt.

Aufgabe der vorliegenden Erfindung war es nun, diese Nachteile zu beheben. Dabei sollte vor allem eine deutliche Senkung der Einbrenntemperatur und damit der Energiekosten erreicht werden.

Es wurde nun gefunden, dass durch die Verwendung von Umsetzungsprodukten aus

a) mindestens einem Polyisocyanat

b) mindestens einem sekundären Monoamin und gegebenenfalls

c) einem oder mehreren Polyalkoholen mit mindestens zwei Hydroxylgruppen

in Kombination mit bestimmten Polyadditions-, Polykondensations- oder Polymerisationsprodukten hitzehärtbare Überzugsmittel hergestellt werden können, die bei Temperaturen oberhalb von 130°C zu harten, elastischen Filmen aushärten, wobei keinerlei Härtungskatalysator zugesetzt werden muss.

Gegenstand der vorliegenden Erfindung sind hitzehärtbare Überzugsmittel. die dadurch gekennzeichnet sind, dass sie als Bindemittel enthalten ein Gemisch aus

(A) mindestens einem Polyadditions-, Polykondensations- oder Polymerisationsprodukt mit einem mittleren Molekulargewicht $\overline{M}_n$ von 500 bis 10 000, welches im Mittel pro Molekül mindestens zwei OH- und/oder primäre und/oder sekundäre Aminogruppen besitzt und

(B) einem Umsetzungsprodukt aus

b1) mindestens einem Polyisocyanat

b2) mindestens einem sekundären Monoamin und gegebenenfalls

b3) einem oder mehreren Polyalkoholen mit mindestens zwei Hydroxylgruppen,

mit der Massgabe, dass Komponente (A)

a1) ein Umsetzugsprodukt aus einem oder mehreren aromatischen Epoxidharzen und einem oder mehreren primären, sekundären oder tertiären Mono- und/oder Polyaminen,

a2) ein stickstoffbasische Gruppen tragendes Polyadditionsprodukt, welches an aromatische Ringe gebundene Gruppierungen der allgemeinen Formel (I)

$$-CH_2\text{-}NH\text{-}\overset{\overset{\displaystyle O}{\|}}{C}\text{-}CR^1=CHR^2 \qquad (I),$$

wobei $R^1$ und $R^2$ untereinander gleich oder verschieden sind und für Wasserstoff oder eine Methylgruppe stehen,

a3) ein Umsetzungsprodukt aus phenolischen Mannichbasen und Epoxidharzen,

a4) ein Polyacrylat und/oder

a5) ein Polydienharz oder -öl ist.

Zu den Aufbaukomponenten der erfindungsgemäss hitzehärtbaren Übersetzungsmittel ist im einzelnen folgendes zu sagen:

Die Komponente (A) ist ein Polyadditions-, Polykondensations- oder Polymerisationsprodukt mit einem mittleren Molekulargewicht $\overline{M}_n$ von 500 bis 10 000 und kann aus verschiedenen Verbindungsklassen ausgewählt sein. Sie muss im Mittel mindestens zwei OH- und/oder primäre und/oder sekundäre Aminogruppen besitzen. Beispiele geeigneter Materialien sind Umsetzungsprodukte von Epoxidharzen mit Aminen und Polyacrylatharze. Eine weitere geeignete Verbindungsklasse sind Polydienharze oder -öle, z.B. Polybutadienöle. In diese lassen sich z.B. durch Addition von Mercaptoethanol an einen Teil der Doppelbindungen OH-Gruppen einführen. Eine weitere Möglichkeit, OH-Gruppen einzuführen, ist die Umsetzung mit Maleinsäureanhydrid und nachfolgende Reaktion mit OH-haltigen Aminen wie Ethanolamin oder Diethanolamin. Auch durch Epoxidierung der Polybutadienöle mit Persäuren und anschliessende Umsetzung mit Aminen lässt sich die benötigte Derivatisierung durchführen.

Geeignete Polyacrylate sind OH-gruppenhaltige Polyacrylate mit einer Hydroxylzahl von 25 bis 500. Diese sollten eine Säurezahl < 25, bevorzugt < 10 und einen K-Wert nach Fikentscher (3%ig in Aceton) von 10 bis 40, vorzugsweise von 12 bis 25 aufweisen und können z.B. folgende Monomeren einpolymerisiert enthalten:

10 bis 100 Gew.-%, vorzugsweise 20 bis 40 Gew.-%, mindestens eines OH- oder NH-Gruppen enthaltenden Monomeren, beispielsweise Isopropylaminopropylmethacrylamid oder Hydroxy-($C_2$-$C_4$)-alkylester einer α,β-ethylenisch ungesättigten

Carbonsäure, beispielsweise 2-Hydroxyethyl- und Hydroxypropyl(meth)acrylat sowie Butandiol-mono-(meth)acrylat, 0 bis 90 Gew.-%, vorzugsweise 60 bis 80 Gew.-%, mindestens einer ethylenisch ungesättigten Carboxyl- und Hydroxylgruppen freien Verbindung, beispielsweise Vinylaromaten, wie Styrol und Vinyltoluol, Vinylester von Carbonsäuren mit 2 bis 18 Kohlenstoffatomen, wie Vinylacetat und Vinylpropionat, Vinylether von Monoalkanolen mit 1 bis 18 Kohlenstoffen, wie Vinylmethylether und Vinylisobutylether, Ester der Acrylsäure oder Methacrylsäure mit $C_1$-$C_{12}$-Monoalkanolen, entsprechende Maleinsäure-, Fumarsäure- und Itaconsäurediester, (Meth-)acrylsäureamid, (Meth-)arcylsäurenitril, Monomere mit tertiären Aminogruppen, wie Diethylaminoethylacrylat oder Diethylaminoethylacrylamid sowie Gemische dieser Monomeren. Eine weitere Möglichkeit, basische Acrylate zu erhalten, ist der Einsatz von Epoxidgruppen tragenden Monomeren wie Glycidylmethacrylat und Addition von Aminen an die Oxiranringe der Polymerisate.

Geeignete Epoxidharze für die Herstellung der Komponenten a1) und a3) sind z.B. Glycidylether, wie sie aus 2,2-Bis-(4-hydroxyphenyl)-propan und Epichlorhydrin hergestellt werden. Diese Epoxidharze können weiter modifiziert sein, z.B. durch Umsetzung mit polyfunktionellen Alkoholen oder SH-Verbindungen. Beispiele solcher, für die Modifizierung geeigneter polyfunktioneller Alkohole sind Ethylenglykol, Propylenglykol-1,2, Propylenglykol-1,3 und Butandiol-1,4.

Ist eine Elastifizierung erwünscht, können auch noch langkettige polyfunktionelle Alkohole oder Mercaptane eingesetzt werden. Werden die polyfunktionellen Alkohole oder Mercaptane in grösseren als äquivalenten Mengen in Bezug auf die vorhandenen Epoxidgruppen eingesetzt, so entstehen Produkte mit endständigen OH- oder SH-Gruppen. Setzt man dagegen geringere als äquivalente Mengen ein, so entstehen Produkte mit endständigen Epoxidgruppen, die gegebenenfalls weiter umgesetzt werden können. Während die Umsetzung der Mercaptane mit Epoxidgruppen bereits ohne Katalysator abläuft, ist für die Umsetzung der Alkohole die Verwendung eines Katalysators wie z.B. Dimethylbenzylamin und höherer Temperaturen von etwa 50 bis 150°C notwendig.

Umsetzungsprodukte von Epoxidharzen mit primären, sekundären oder tertiären Mono- und/oder Polyaminen sind als Komponente (A) einsetzbar. Dabei bietet sich besonders die Umsetzung mit hydroxylgruppenhaltigen Aminen, wie z.B. Ethanolamin, Methylethanolamin und Diethanolamin an.

Werden als Komponente (A) solche Produkte eingesetzt, die ausreichende Mengen an Aminogruppen enthalten, um nach Protonierung mit Säuren wasserlöslich oder wasserverdünnbar zu werden, lassen sich in Kombination mit Komponente (B) wasserdispergierbare Einbrennlackbindemittel herstellen, insbesondere solche, die für die kathodische Elektrotauchlackierung verwendet werden können. Für diesen Zweck können die oben erwähnten Umsetzungsprodukte von Epoxidharzen mit primären oder sekundären Aminen eingesetzt werden.

Viele der für die kathodische Elektrotauchlackierung vorgeschlagenen Trägerharze sind auch als Komponente (A) in den erfindungsgemässen Überzugsmitteln einsetzbar, so z.B. die Umsetzungsprodukte phenolischer Mannichbasen mit Epoxidharzen gemäss der DE-PS 2 419 179, die Umsetzungsprodukte von kettenverlängerten Epoxidharzen mit sekundären Aminen gemäss der US-PS 4 104 147, Umsetzungsprodukte von (Meth)-acrylamidomethylierten Phenolen, Aminen und Epoxidharzen, z.B. gemäss DE-OS 2 942 488 und DE-OS 3 021 300; wichtig ist nur, dass sie ein Molekulargewicht von 500 bis 10 000 aufweisen und im Mittel pro Molekül mindestens zwei OH- und/oder primäre und/oder sekundäre Aminogruppen besitzen. Während es für die Vernetzungsaktivität beim Einbrennen völlig ausreicht, wenn die Komponente (A) lediglich OH- und keine primären und/oder sekundären Aminogruppen enthält, ist es doch häufig vorteilhaft, Produkte einzusetzen, die auch primäre und/oder sekundäre Aminogruppen enthalten, da sich damit wässrige Elektrotauchlackbäder mit hohen pH-Werten von z.B. 6,5 bis 8,0 herstellen lassen. Durch hohe pH-Werte, vor allem solche nahe pH 7 oder darüber, lässt sich eine Korrosion von Anlagen vermeiden. Eine Möglichkeit, zu als Komponente (A) geeigneten Produkten mit primären und sekundären Aminogruppen zu kommen, ist die Umsetzung von überschüssigen primären Diaminen mit Epoxidharzen und anschliessende Abtrennung des überschüssigen Amins bei erhöhter Temperatur und vermindertem Druck.

Als Diamine kommen dafür vor allem solche mit 2 bis 6 Kohlenstoffatomen in Betracht, z.B. Ethylendiamin, 1,2- und 1,3-Diaminopropan, 1,4-Diaminobutan und Hexamethylendiamin. Die Reaktionsprodukte können, falls gewünscht, mit Dicarbonsäuren kettenverlängert werden, z.B. mit Sebazinsäure oder mit dimerer Fettsäure. Durch das Verhältnis Dicarbonsäure zu Epoxidharz-Aminoaddukt kann man das gewünschte Molekulargewicht einstellen, z.B. kann man auf zwei Moleküle Epoxidharz-Aminaddukt 1 Mol dimerer Fettsäure einsetzen.

Eine weitere Möglichkeit, als Komponente (A) geeignete Produkte mit primären Aminogruppen herzustellen, ist der Umsatz von Epoxidharzen mit sekundären Aminen, die geblockte primäre Aminogruppen enthalten. Beispiele für solche Amine sind das Diketimin von Diethylentriamin, das Ketimin von Aminoethylethanolamin und das Ketimin von N-Methylethylendiamin. Die Ketimine lassen sich in einfacher Weise aus den freien Aminen und einem Keton, z.B. Methylisobutylketon, unter Auskreisen von Wasser herstellen. Bei der Umsetzung mit Epoxidharzen reagiert nur die sekundäre Aminogruppe, anschliessend kann das Ketimin durch Zugabe von Wasser gespalten werden, wobei sich die freie primäre Aminogruppe zurückbildet. Durch Umsetzung eines Teils der primären Aminogruppen mit Dicarbonsäuren lassen sich auch diese Produkte durch Kettenverlängerung elastifizieren.

Komponente (A) ist im erfindungsgemässen Bindemittelgemisch im allgemeinen in einer Menge von 30 bis 95, vorzugsweise 60 bis 85 Gew.-%, der Gesamtmenge des Bindemittelgemisches enthalten.

Komponente (B) ist ein Umsetzungsprodukt aus

b1) mindestens einem Polyisocyanat

b2) mindestens einem sekundären Monoamin und gegebenenfalls

b3) einem oder mehreren Polyalkoholen mit mindestens zwei Hydroxylgruppen.

Als Isocyanate können beliebige aliphatische, alicyclische und/oder aromatische Polyisocyanate eingesetzt werden. Beispiele geeigneter Polyisocyanate sind Diisocyanate wie Hexamethylendiisocyanat, Isophorondiisocyanat, Cyclohexan-1,4-diisocyanat, Toluylendiisocyanat, 4,4'-Diphenylmethandiisocyanat, Triisocyanate wie biuretisiertes oder isocyanuratisiertes Hexamethylendiisocyanat und das Additionsprodukt von 3 Mol Toluylendiisocyanat an 1 Mol Trimethylolpropan. Auch Isocyanat-Präpolymere, z.B. Additionsprodukte von Diisocyanaten an Polyester- oder Polyesterpolyole, können als Polyisocyanate eingesetzt werden.

Als sekundäre Monoamine kommen vor allem sekundäre aliphatische, cycloaliphatische oder araliphatische Amine mit einem Siedepunkt unter 200°C in Betracht, bevorzugt sind solche mit einem Siedepunkt zwischen 100 und 200°C. Beispiele geeigneter sekundärer aliphatischer Amine sind Dimethylamin, Diethylamin, Dipropylamin, Dibutylamin, Dipentylamin, Dihexylamin und Isomere davon, wie z.B. Diisopropylamin, auch asymmetrische, wie N-Ethyl-1-propanamin. Beispiele geeigneter cycloaliphatischer bzw. araliphatischer Amine sind Dicyclohexylamin und N-Methylanilin. Gegebenenfalls können zusätzlich Polyalkohole mit mindestens zwei Hydroxylgruppen eingesetzt werden. Diese können niedermolekulare, definierte Verbindungen, wie z.B. Butandiol-1,4 oder hydriertes Bisphenol A sein, es können jedoch auch polymere Alkohole wie z.B. Polyester- oder Polyetherpolyole mit einem Molekulargewicht bis zu 10 000 eingesetzt werden.

Die Mengen der Teilkomponenten b1), b2) und b3) werden so gewählt, dass die Summe der Äquivalente von b2) und b3) mindestens gleich den Äquivalenten an b1) ist. Ist die Summe grösser, so entstehen Produkte, die noch freie Hydroxylgruppen enthalten; im allgemeinen wird man jedoch die Summe der Äquivalente von b2) und b3) etwa gleich den Äquivalenten b1) wählen.

Die Umsetzung erfolgt bei den für Isocyanatreaktionen üblichen Bedingungen, die Reihenfolge der Zugabe von b1), b2) und b3) ist beliebig, die Reaktionstemperatur kann von Raumtemperatur bis etwa 150°C betragen. Sind die Einsatzstoffe und das Reaktionsprodukt bei Reaktionstemperatur flüssig, so kann ohne Lösungsmittel gearbeitet werden, im allgemeinen wird man die Reaktion jedoch in einem inerten Lösungsmittel wie einem Ether, Ester, Keton oder Kohlenwasserstoff durchführen.

Komponente (B) wird im allgemeinen in einer Menge von 5 bis 70, vorzugsweise 5 bis 40 Gew.-%, bezogen auf die Gesamtmenge des Bindemittelgemisches (A) + (B), einsetzt.

Zur Herstellung der erfindungsgemässen Überzugsmittel werden die Komponenten (A) und (B) gemischt. Bei Komponenten mit niedriger Viskosität kann dies in Substanz erfolgen, wobei gegebenenfalls auf Temperaturen bis maximal 130°C erwärmt wird. Produkte höherer Viskosität werden vor der Mischung in organischen Lösungsmitteln gelöst. Dabei können übliche Lösemittel wie Alkohole, Ketone, Ester, Ether, Kohlenwasserstoffe usw. verwendet werden.

Die erfindungsgemässen Überzugsmittel können, gegebenenfalls mit Zusätzen mit Pigmenten, Hilfsmitteln und Härtungskatalysatoren, durch die übliche Methoden, wie Spritzen, Tauchen, Giessen und Rakeln auf Substrate wie Holz, Kunststoff oder Metall aufgebracht werden. Für die Herstellung von Pulverlacken werden die jeweils festen, lösemittelfreien Komponenten (A) und (B), deren Erweichungspunkte aus Gründen der Blockfestigkeit jeweils > 60°C liegen sollten, trocken gemahlen und mit üblichen Zusätzen, wie Pigmenten, Füllstoffen und Verlaufshilfsmitteln, beispielsweise auf Polyacrylatbasis, vermischt. Die Mischungen werden anschliessend bei Temperaturen um 100°C schmelzhomogenisiert (Extruder). Nach Abkühlen der Extrudate auf Raumtemperatur werden diese gründlich gemahlen. Durch Sieben werden grobe Anteile (über 70 µm) abgetrennt. Die Applikation der Pulverlacke erfolgt üblicherweise durch elektrostatisches Pulversprühen.

Produkte, welche, bedingt durch ihren Gehalt an Aminogruppen, nach Neutralisation mit Säuren, wie z.B. Essigsäure, wasserdispergierbar werden, können auch als wässrige Dispersion angewandt werden. Derartige Produkte lassen sich vorteilhaft für die Elektrotauchlackierung elektrisch leitfähiger Substrate, wie z.B. Metallteilen, Blechen usw. aus Messing, Kupfer, Aluminium, metallisierte Kunststoffe oder mit leitendem Kohlenstoff überzogene Materialien, sowie Eisen und Stahl, die gegebenenfalls chemisch vorbehandelt, z.B. phosphatiert, sind, verwenden. Dazu wird zur zumindest teilweisen Neutralisation eine Säure, wie z.B. Ameisensäure, Essigsäure oder Milchsäure, eingerührt und mit Wasser auf die Verarbeitungskonzentration verdünnt. Soll anstatt der normalen kathodischen Elektrotauchlackierung das EPC-Verfahren (Electro-Powder-Coating) angewandt werden, so wird man zweckmässigerweise die Komponente (B) als Pulver und die Komponente (A) als wasserdispergierbares Trägerharz verwenden. Dabei müssen als Komponente (B) Produkte verwendet werden, welche bei Raumtemperatur fest sind.

Für die kathodische Elektrotauchlackierung wird im allgemeinen ein Feststoffgehalt von 5 bis 30 Gew.-% eingestellt. Die Abscheidung erfolgt üblicherweise bei Temperaturen von 15 bis 40°C während einer Zeit von 1 bis 5 Minuten und bei pH-Werten von 4,0 bis 8,5, vorzugsweise pH 5,0 bis 7,5, bei Abscheidespannungen von 50 bis 500 Volt. Der zu beschichtende elektrisch leitende Körper wird dabei als Kathode geschaltet. Der abgeschiedene Film wird bei Temperaturen oberhalb von 130°C ca. 30 Minuten gehärtet.

Die folgenden Beispiele sollen die Erfindung näher erläutern, ohne sie zu beschränken. Die in den Beispielen genannten Teile und Prozente sind, soweit nicht anders angegeben, Gewichtsteile und Gewichtsprozente.

*Herstellung der Komponente (A)*

*Komponente $A_1$:*

400 Teile Hexamethylendiamin werden auf 80°C erwärmt. Anschliessend wird eine 80%ige Lösung von 400 Teilen eines handelsüblichen Epoxidharzes auf Basis von 2,2-Bis-(4-hydroxyphenyl)-propan mit einem Epoxidäquivalentgewicht von 500 in Toluol zugefügt. Nach Abklingen der anfänglich exothermen Reaktion lässt man 30 Minuten bei 100°C ausreagieren. Dann wird überschüssiges Hexamethylendiamin und Toluol unter vermindertem Druck (15 mbar) abdestilliert, wobei eine Innentemperatur von 180°C erreicht wird. In einem Dünnschichtverdampfer werden schliesslich bei 2,5 mbar und 180°C die verbliebenen Spuren von freiem Amin entfernt. Das Produkt hat eine Aminzahl von 169 mg KOH/g und einen Erweichungspunkt von 95°C.

*Komponente $A_2$:*

200 Teile der Komponente $A_1$, 30 Teile dimerisierte Fettsäure und 20 Teile Xylol werden allmählich unter Auskreisen von Wasser auf 190°C erhitzt und eine Stunde bei dieser Temperatur gehalten. Nach dem Abkühlen auf 130°C wird zunächst mit 9 Teilen Butylglykol und danach mit 70 Teilen Isobutanol verdünnt. Das Produkt hat einen Festgehalt von 70%.

*Herstellung der Komponente (B)*

Es wird 1 Äquivalent des jeweiligen Polyisocyanats vorgelegt, in einem isocyanatinerten Lösemittel verdünnt, so dass das Endprodukt eine Konzentration von 50% aufweist und unter Rühren und Feuchtigkeitsausschluss das sekundäre Amin, gegebenenfalls zusammen mit dem Polyol, während 30 Minuten bei 80°C zugegeben. Anschliessend wird der Ansatz solange bei 80°C weitergerührt, bis ein NCO-Wert von kleiner 1 erreicht ist.

Tabelle 1

| Komponente B | 1 Äquivalent Polyisocyanat | Lösemittel | Amin [Mol] | Polyol [Äquiv.] |
|---|---|---|---|---|
| $B_1$ | HDI | Toluol | 1 DBA | — |
| $B_2$ | BHDI | Dioxan | 1 DBA | — |
| $B_3$ | IHDI | Dioxan | 1 DBA | — |
| $B_4$ | TDI | Toluol | 1 DHA | — |
| $B_5$ | TMPTDI | Toluol | 1 DBA | — |
| $B_6$ | IPDI | Dioxan | 1 DBA | — |
| $B_7$ | IHDI | Toluol | 0,7 DBA | 0,3 HDL |
| $B_8$ | TMPTDI | Toluol | 0,7 DBA | 0,3 NPDL |

*Abkürzungen:*

- HDI = Hexamethylendiisocyanat
- BHDI = biuretisiertes Hexamethylendiisocyanat, 21,9% NCO
- IHDI = isocyanuratisiertes Hexamethylendiisocyanat, 22% NCO
- TDI = Toluylendiisocyanat, Isomerengemisch 80%, 2,4 und 20% 2,6
- TMPTDI = Präpolymeres aus 1 Mol Trimethylolpropan und 3 Mol Toluylendiisocanat
- IPDI = Isophorondiisocyanat
- DBA = Dibutylamin
- DHA = Dihexylamin
- HDL = Hexandiol-1,6
- NPDL = Neopentylglykol-1,3

*Beispiel 1*

Herstellung eines konventionell applizierbaren Weisslacks

100 Teile der Komponente $A_1$, 120 Teile Ethylglykol, 60 Teile Butylglykol, 80 Teile Titandioxid und 100 Teile der Komponente $B_2$ werden unter Erwärmen verrührt und anschliessend in einer Sandmühle bis zu einer Körnigkeit nach DIN 53 203 von 10 µm vermahlen. Nach Abtrennen der Mahlkörper resultiert eine Lacklösung mit einem Festgehalt von 50%. Diese wird auf Stahlblech gerakelt (Nassfilmdicke 100 µm) und 20 Minuten bei 140°C eingebrannt. Es entsteht ein hochglänzender, harter und elastischer Lackfilm, der gegen Aceton (100maliges Hin- und Herreiben mit einem Aceton-getränkten Wattebausch) vollkommen resistent ist.

Die folgenden Beispiele zeigen den Einsatz der erfindungsgemäss hitzehärtbaren Überzugsmittel in kathodisch abscheidbaren Elektrotauchlacken:

*Beispiel 2*

100 Teile der Komponente $A_2$, 60 Teile der Komponente $B_2$ und 2,2 Teile Essigsäure werden gemischt.

*Beispiel 3*

Es wird ein Bindemittel hergestellt, indem 100 Teile der Komponente $A_2$ mit 60 Teilen der Komponente $B_3$ gemischt werden. Nach Zusatz von 2,2 Teilen Essigsäure wird das Bindemittel wasserverdünnbar.

*Beispiel 4*

100 Teile der Komponente $A_2$ und 60 Teile der Komponente $B_5$ werden innig vermischt. Danach werden 2,3 Teile Essigsäure zugesetzt.

*Prüfung der Bindemittel*

Zur Prüfung als kationische Elektrotauchlacke werden durch Zugabe von Wasser aus den mit Säure versetzten Bindemitteln 10%ige Dispersionen hergestellt. Unter Rühren wird zu jeweils 1000 Teilen der jeweiligen Bindemitteldispersion 66 Teile einer Pigmentpaste zugesetzt, welche folgendermassen hergestellt worden ist:

Pigmentpaste:

Nach Beispiel 1a) der DE-OS 3 121 765 wird ein Pastenbindemittel hergestellt. Dazu werden in einem Reaktionsgefäss 200 Teile Ethylenglykolmonobutylether auf 90°C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Anschliessend wird 1 Stunde lang bei 90°C nachpolymerisiert. Das resultierende Lösungspolymerisat hat einen K-Wert nach Fikentscher von 24. Der Festkörpergehalt der Copolymerisatlösung beträgt 76%.

In einer Rührwerksmühle werden 250 Teile der obigen Copolymerisatlösung, 210 Teile Ethylenglykolmonobutylether, 555 Teile Ethylenglykolmonoethylether, 837 Teile Wasser, 1084 Teile Kaolin, 217 Teile basisches Bleisilikat, 145 Teile Russ, 36 Teile Rutil und 3000 Teile Glasperlen von einem Durchmesser von 2 mm 45 Minuten bei einer Drehzahl von 1000 Umdrehungen/Minute gerührt. Nach dem Abtrennen der Glasperlen wird eine Schwarzpaste mit einem Festgehalt von 50,6% erhalten.

Die Bäder werden dann 48 Stunden bei 30°C gerührt. An kathodisch geschalteten, zinkphosphatierten Prüftafeln aus Stahl werden Lackfilme innerhalb von 2 Minuten bei der in Tabelle 2 angegebenen Spannung abgeschieden und 20 Minuten bei 180°C, bei 160°C bzw. bei 140°C eingebrannt. Anschliessend wird die Beständigkeit gegen Aceton durch 30maliges Hin- und Herreiben mit einem acetongetränkten Wattebausch und die Elastizität in Form der Schlagtiefung geprüft. Die folgende Tabelle zeigt die Ergebnisse.

Tabelle 2 Ergebnisse der Bindemittelprüfung bei 17µm Schichtdicke

| Lackbad aus | Umgriff nach Ford bei Spannung | Acetonfestigkeit bei Einbrenntemp. | Schlagtiefung Nm | Salzsprühtest nach ASTM B 117-73, Unterwanderung am Ritz nach 500 Stunden |
|---|---|---|---|---|
| Beispiel 2 | 19,5 cm (250 V) | 160° 1 | 18,08 | 0,5 mm |
| | | 140° 1 | 18,08 | 0,7 mm |
| Beispiel 3 | 21 cm (280 V) | 160° 1 | 18,08 | 0,3 mm |
| | | 140° 1 | 18,08 | 0,5 mm |
| Beispiel 4 | 22 cm (300 V) | 160° 1 | 18,08 | 0,4 mm |
| | | 140° 1 | 18,08 | 0,5 mm |

Acetonfestigkeit Note 1: unangreifbar

Die Schlagtiefung wurde mit einem mandrel impact tester der Fa. Gardner nach ASTM D 2794 bestimmt.

**Patentansprüche**

1. Hitzehärtbare Überzugsmittel, dadurch gekennzeichnet, dass sie als Bindemittel enthalten ein Gemisch aus

(A) mindestens einem Polyadditions-, Polykondensations- oder Polymerisationsprodukt mit einem mittleren Molekulargewicht $\overline{M}_n$ von 500 bis 10 000, welches im Mittel pro Molekül mindestens zwei OH- und/oder primäre und/oder sekundäre Aminogruppen besitzt und

(B) einem Umsetzungsprodukt aus

b1) mindestens einem Polyisocyanat

b2) mindestens einem sekundären Monoamin und gegebenenfalls

b3) einem oder mehreren Polyalkoholen mit mindestens zwei Hydroxylgruppen

mit der Massgabe, dass Komponente (A)

a1) ein Umsetzugsprodukt aus einem oder mehreren aromatischen Epoxidharzen und einem oder mehreren primären, sekundären oder tertiären Mono- und/oder Polyaminen,

a2) ein stickstoffbasische Gruppen tragendes Polyadditionsprodukt, welches an aromatische Ringe gebundene Gruppierungen der allgemeinen Formel (I)

$$-CH_2-NH-\overset{\overset{\large O}{\|}}{C}-CR^1=CHR^2 \qquad (I),$$

wobei $R^1$ und $R^2$ untereinander gleich oder verschieden sind und für Wasserstoff oder eine Methylgruppe stehen, enthält,

a3) ein Umsetzungsprodukt aus phenolischen Mannichbasen und Epoxidharzen,

a4) ein Polyacrylat und/oder

a5) ein Polydienharz oder -öl ist.

2. Verwendung der hitzehärtbaren Überzugsmittel nach Anspruch 1 für die Pulverlackierung.

3. Verwendung der hitzehärtbaren Überzugsmittel nach Anspruch 1 für lösemittelhaltige Einbrennlacke.

4. Hitzehärtbare Überzugsmittel nach Anspruch 1, dadurch gekennzeichnet, dass sie nach zumindest teilweiser Neutralisation mit einer Säure wasserverdünnbar sind.

5. Verwendung der hitzehärtbaren Überzugsmittel nach Anspruch 4 für die kathodische Elektrotauchlackierung.

6. Wässriges Lackbad für kathodische Elektrotauchlackierung, dadurch gekennzeichnet, dass es 5 bis 30 Gew.-% eines Überzugsmittels gemäss Anspruch 4 enthält.

**Claims**

1. A heat-curable surface-coating agent which contains, as binder, a mixture of

(A) one or more polyadducts, polycondensates or other polymers having an average molecular weight $\overline{M}_n$ of from 500 to 10,000 and, per molecule, on average two or more OH or primary or secondary amino groups, or two or more OH and primary or secondary amino groups, or two or more OH and primary and secondary amino groups, or two or more primary and secondary amino groups, and

(B) a reaction product of

b1) one or more polyisocyanates,

b2) one or more secondary monoamines and, if desired,

b3) one or more polyalcohols having two or more hydroxyl groups,

with the proviso that component (A) is

a1) a reaction product of one or more aromatic epoxy resins and one or more primary, secondary or tertiary monoamines or polyamines or a mixture of one or more primary, secondary or tertiary monoamines and polyamines,

a2) a polyadduct which carries basic nitrogen groups and contains, bonded to aromatic rings, groups of the general formula (I)

$$-CH_2-NH-\overset{\displaystyle O}{\overset{\|}{C}}-CR^1=CHR^2 \qquad (I),$$

where $R^1$ and $R^2$ are identical or different and each is hydrogen or methyl,

a3) a reaction product of phenolic Mannich bases and epoxy resins,

a4) a polyacrylate and/or

a5) a polydiene resin or oil.

2. The use of a heat-curable surface-coating agent as claimed in claim 1 for powder coating.

3. The use of a heat-curable surface-coating agent as claimed in claim 1 for solvent-containing baking finishes.

4. A heat-curable surface-coating agent as claimed in claim 1, which is water-dilutable after partial or complete neutralization with an acid.

5. The use of a heat-curable surface-coating agent as claimed in claim 4 for cathodic electrocoating.

6. An aqueous cathodic electrocoating bath which contains from 5 to 30% by weight of a surface-coating agent as claimed in claim 4.

**Revendications**

1. Compositions de revêtement thermodurcissables, caractérisées en ce qu'elles contiennent comme liant un mélange de:

(A) au moins un produit de polyaddition, de polycondensation ou de polymérisation d'un poids moléculaire moyen $\overline{M}_n$ compris entre 500 et 10 000, contenant en moyenne deux groupes OH et(ou) amine primaires et(ou) secondaires par molécule et

(B) du produit de la réaction de

b1) au moins un polyisocyanate

b2) au moins une mono-amine secondaire et éventuellement

b3) un ou plusieurs polyalcools avec au moins deux groupes hydroxyle,

et la composante (A) est

a1) le produit de la réaction d'une ou de plusieurs résines époxides aromatiques et d'une ou de plusieurs mono- et(ou) poly-amines primaires, secondaires ou tertiaires;

a2) un produit de polyaddition à groupes azotés basiques, contenant des groupements de la formule générale (I)

$$-CH_2-NH-\overset{\displaystyle O}{\overset{\|}{C}}-CR^1=CHR^2 \qquad (I),$$

dans laquelle $R^1$ et $R^2$, qui peuvent être identiques ou différents, désignent chacun un atome d'hydrogène ou un radical méthyle, liés à des noyaux aromatiques;

a3) le produit de la réaction de bases de Mannich et de résines époxydes;

a4) un polyacrylate et(ou)

a5) une résine ou une huile polydiénique.

2. Utilisation de compositions de revêtement thermodurcissables suivant la revendication 1 pour le laquage ou vernissage par poudre.

3. Utilisation de compositions de revêtement thermodurcissables suivant la revendication 1 dans des vernis au four contenant un solvant.

4. Compositions de revêtement thermodurcissables suivant la revendication 1, caractérisées en ce qu'elles peuvent être diluées par de l'eau après une neutralisation au moins partielle par un acide.

5. Utilisation de compositions de revêtement thermodurcissables suivant la revendication 4 pour le vernissage électrolytique cathodique à l'immersion.

6. Bain de vernissage aqueux pour le vernissage électrolytique cathodique, caractérisé par une teneur de 5 à 30% en poids d'une composition de revêtement suivant la revendication 4.